# EUROPEAN PATENT SPECIFICATION

(11) **EP 1 788 388 B1**
(45) Date of publication and mention of the grant of the patent: **30.06.2010**
(21) Application number: 06255923.2
(22) Date of filing: 20.11.2006
(51) Int. Cl.: G01N 30/34, G01N 30/36

(54) **Devices and methods using fluid-transporting features with differing residence times**
Vorrichtungen und Verfahren umfassend Flüssigkeitstransportmechanismen mit unterschiedlichen Verweilzeiten
Dispositifs et procédés utilisant systèmes de déplacement de fluide avec temps de séjour différentes

(30) Priority: 18.11.2005 US 283363
(43) Date of publication of application: 23.05.2007
(73) Proprietor: Agilent Technologies, Inc., Santa Clara CA 95051 (US)
(72) Inventor: Brennen, Reid, San Francisco, CA 94110 (US); Yin, Hongfeng, Cupertino, CA 95014 (US); Killeen, Kevin, Palo Alto, CA 94303 (US); Schleifer, Arthur, Portola Valley, CA 94028 (US)
(74) Representative: Barth, Daniel Mathias

(56) References cited:
- EP-A2- 1 338 894
- US-A1- 2004 129 336
- HIRATA Y ET AL: "SINGLE PUMP ON-LINE MIXING SYSTEM FOR CAPILLARY SUPERCRITICAL FLUIDCHROMATOGRAPHY" JOURNAL OF HIGH RESOLUTION CHROMATOGRAPHY, WILEY VCH, WEINHEIM, DE, vol. 16, no. 10, 1 October 1993 (1993-10-01), pages 601-604, XP000416665 ISSN: 0935-6304
- CAPPIELO A ET AL: "VARIABLE-GRADIENT GENERATOR FOR MICRO- AND NANO-HPLC" ANALYTICAL CHEMISTRY, AMERICAN CHEMICAL SOCIETY. COLUMBUS, US, vol. 75, no. 5, 1 March 2003 (2003-03-01), pages 1173-1179, XP001170276 ISSN: 0003-2700

## Description

### FIELD OF THE INVENTION

The invention relates generally to devices and methods that use fluid-transporting features of differing fluid dwell times. In particular, the invention relates to fluidic devices and methods that use fluid-transporting features of differing dwell times to produce an output stream that exhibits at least one desired characteristic, e.g. a concentration gradient, which in turn may be exploited for applications such microfluidic separation.

### BACKGROUND OF THE INVENTION

Analysis of a fluid sample often involves separating the sample into its constituents. For example, liquid chromatography (LC) separation typically involves employing a mobile phase to convey a multiconstituent sample past surfaces of a stationary phase, e.g., separation media. The speed at which any sample constituent travels past the stationary phase depends on its partition between mobile phase and stationary phase.

Separation performance can vary according to the stationary phase used. In reverse phase liquid chromatography, for example, wherein sample constituents are separated according to their hydrophobicity, a stationary phase is provided having hydrophobic surfaces. A mobile phase, e.g., a mixture of water and organic solvent, is also provided. As the sample is conveyed past the stationary phase by the mobile phase, the least hydrophobic sample constituents will tend to travel past the stationary phase first, followed by constituents with increasing hydrophobicity.

Separation performance can vary according to the mobile phase employed in LC. Typically, the mobile phase exhibits at least one desired characteristic keyed for separation performance. For example, isocratic LC employs a mobile phase having a constant composition over time. In contrast, gradient LC employs a mobile phase that exhibits a varying composition during separation.

In general, gradient LC offers a number of advantages over isocratic LC. For example, gradient LC is well suited to separation a wide range of compounds with high speed and resolution. In addition, the composition of the mobile phase may be controllably varied, e.g., to exhibit a concentration gradient, so as to trap certain sample components at an upstream portion of the stationary phase, thereby allowing interfering compounds such as salts to be washed away. As a result, gradient LC allows of injection of large sample volumes without compromising separation efficiency and is well-suited for analysis of low concentration samples.

Microfluidic techniques have been successfully used to carry out gradient LC. For example, an integrated microfluidic LC device is described in Unites States Patent Application Publication No. 2003/0017609 to Yin et al. Such microfluidic devices may be formed as a lab-on-a-chip from a substrate and a cover plate that incorporate a plurality of functionalities e.g., sample injection, separation and flow switching, on a single integrated device. Since microfluidic technologies generally involve the use of small volumes of fluids, microfluidic technologies are particularly desirable in applications that involve fluids that are extremely rare and/or expensive.

Accordingly, there is a need for smooth gradients for microfluidic applications. It is not, however, a trivial matter to produce and deliver a mobile phase that exhibits a gradient at an appropriate flow rate for microfluidic applications. For example, when a mobile phase is required that exhibits a concentration gradient of two compositionally different fluids, e.g., a first fluid and a second fluid, the fluids may be mixed in a manner such that the ratio of the first and second fluids are changed over time. In such a case, two pumps may be used to pump the two fluids independently. However, conventional LC pumps typically perform well only within a certain flow-rate range, generally above 1 µl/min. Accordingly, when a linear gradient of the first and second fluids is desired, one of the two pumps may have to convey fluid at a much lower flow-rate than the combined flow-rate, sometimes out of the optimum flow-rate range of the pump.

One way in which a fluid may be delivered by a pump at a rate lower than its optimum flow rate is operate the pump at its optimum flow rate but to divert excess fluid flow. For example, fluid conveyed by a LC pump may be split into a plurality of streams. Some of the streams are delivered while the other streams are not. In such a case, however, diverted fluid represents a source of potential waste.

In addition, it is not a trivial matter to produce and deliver a mobile phase having a concentration gradient at a low flow rate without an excessive delay time. Delay time is total time it takes to generate a mobile phase having a concentration gradient and to deliver the mobile phase. To generate a concentration gradient in a mobile phase, mixing of compositionally different fluids is required. Such mixing typically involves equipment that requires a volume of the different fluids for operability. Thus, for example, in a system that includes a conventional LC pump, a pressure damper, and mixer having a combined, the delay time may be equal to the quotient of the combined volume and the flow-rate. Since the delay time is inversely proportional to the flow rate, an excessively low flow rate will result in an excessively high delay time.

In any case, numerous publications and patents describe gradient generation technologies. Exemplary publications include: Dentinger, S. (2001), "Generation of gradients having complex shapes using microfluidic networks," Analytical Chemistry, 72:1240-46; Deguchi et al. (2004), "Nanoflow gradient generator for capillary high-performance liquid chromatography," Analytical Chemistry, 76: 1524-28; Xie et al. (2004), "An electrochemical pumping system for on-chip gradient generation," Analytical Chemistry, 76:3756-63; Bihan et al. (2001), "Nanoflow Gradient Generator Coupled with µLC-ESI-MS/MS for Protein Identification," Analytical Chemistry, 73:1307-15; U.S. Patent Application Publication No. 2003/0180449 to Wiktorowicz et al.; and U.S. Patent 4,942,018 to Munk. Nevertheless, such technologies generally suffer from problems such as high waste, high complexity, low repeatability, and long delay times.

To overcome such problems, on-chip gradient generation and fluid introduction technologies have been proposed. For example, U.S. Patent No. 6,702,256 to Killeen et al. describes a device that employs a slidably switchable valve for controlling microfluidic flow that may be used in an LC application. In addition, techniques for on-chip generation of a mobile-phase gradient using a network of channels are described in U.S. Patent Application Publication No. 2003/0159993 to Yin et al. and U.S. Patent Application Publication No. 2004/0129336 to Jeon et al.

Nevertheless, there exist opportunities to provide alternatives and improved fluidic technologies to overcome the drawbacks associated with known techniques for producing and delivering a mobile phase.

EP 1338894 discloses a microfluidic device for separating the components of a fluid sample. A cover plate is arranged over the first surface of a substrate, which, in combination with a microchannel formed in the first surface, defines a separation conduit for separating the components of the fluid sample. An inlet port in fluid communication with the separation conduit allows a mobile phase containing a gradient of a selected mobile-phase component to be introduced from an integrated gradient-generation means to the separation conduit. A method is also provided for separating the components of a fluid sample using a mobile phase containing a gradient of a selected mobile-phase component, wherein the gradient is generated within a small volume of mobile phase.

HIRATA Y ET AL: "SINGLE PUMP ON-LINE MIXING SYSTEM FOR CAPILLARY SUPERCRITICAL FLUIDCHROMATOGRAPHY" JOURNAL OF HIGH RESOLUTION CHROMATOGRAPHY, WILEY VCH, WEINHEIM , DE vol. 16, no.10 1 October 1993 (1993-10-01), pages 601-604, XP000416665 ISSN: 0935-6304 discloses a simple inexpensive system comprising a piston pump, switching valves, and capillary tubing has been developed for preparing mixed mobile phases for capillary supercritical fluid chromatography. The system enables the on-line preparation of mixed mobile phases without contamination of the pump with modifier. Modifier concentrations, which can be changed stepwise, were determined both experimentally and theoretically, the latter on the basis of density-viscosity relationships. Examples of both isobaric and pressure programmed separations are demonstrated.

CAPPIELO A ET AL: "VARIABLE-GRADIENT GENERATOR FOR MICRO- AND NANO-HPLC" ANALYTICAL CHEMISTRY, AMERICAN CHEMICAL SOCIETY. COLUMBUS, US, vol. 75, no. 5, 1 March 2003 (2003-03-01), pages 1173-1179, XP001170276 ISSN:0003-2700 discloses a new, simple device that generates accurate nano- and microflow rate gradients from any conventional HPLC system. The core of the new device is represented by an electric-actuated, computer-controlled, multiposition HPLC valve. The valve hosts six reservoirs for as many different mobile-phase compositions of increasing strength. A low flow rate stream pushes the weakest solvent through the column as long as required and at the desired flow rate, until the chromatographic run is started. From this time on, the electric actuation allows one to select which reservoir will be on-line with the column and for how long, thus generating a specific solvent gradient, through a sequence of controlled segments of precise mobile-phase composition. This permits one not only to exactly reproduce the programmed slope but also to achieve different gradient shapes (i.e., liner, convex, concave) for different separation needs. The new device has proven to be reliable and reproducible event at the lowest flow rate test (250 nL min⁻¹) and in different chromatographic conditions.

### SUMMARY OF THE INVENTION

According to the present invention, there is provided a device as set out at claim 1 and a method as set out at claim 4.

An embodiment of the invention provides a fluidic device that includes a plurality of fluid-transporting features extending from a common inlet to a common outlet and a means for effecting fluid flow through the fluid-transporting features. The features are associated with differing fluid dwell times. The means for effecting fluid flow cooperates with the fluid-transporting features to merge fluids from the fluid-transporting features in a manner effective to produce an output stream from the common outlet that exhibits at least one desired characteristic generated as a result of the differing dwell times.

The fluid-transporting features may be varied in construction and/or arrangement. For example, the features may have substantially identical or different lengths, substantially identical and/or different cross-sectional area. In some instances, the features may be constructed in a manner that allows fluid flowing through each feature to exhibit a substantially identical flow rate. The features may be grouped in different stages wherein the features of the same stage have a substantially identical construction and the features of different stages have a different construction.

In some instances, at least one fluid-transporting feature may exhibit different cross-sectional areas between the inlet and outlet. For example, a fluid-transporting feature may include a flow restriction portion and a dwell-time controlling portion. The flow restriction portion may be upstream or downstream from the dwell-time controlling portion. These portions may vary in arrangement and construction as well

In some microfluidic embodiments, a plurality of substrates may also be provided, e.g., in a stack. For example, at least one fluid-transporting feature may be provided as a conduit defined at least in part by a channel located on an interior surface of the stack. When three or more substrates are provided, fluid-transporting features may be formed between any neighboring substrates of the stack.

The invention may be used with a plurality of fluid sources upstream from the inlet. A switching valve may be used to provide alternating communication between the inlet and any of the sources. When the fluids from the fluid sources are compositionally different, the invention may be used to produce an output stream exhibiting a desired concentration profile, e.g., a substantially linear gradient of the fluids.

Another aspect of the invention also provides a method for producing a fluid stream exhibiting at least one desired characteristic. The method involves providing a plurality of fluid-transporting features extending from a common inlet to a common outlet, wherein each fluid-transporting feature is associated with a differing fluid dwell time. Fluid is introduced into the common inlet, thereby effecting fluid flow through the fluid-transporting features, which, in turn, merges to produce an output stream from the common outlet. The output stream exhibits at least one desired characteristic generated as a result of the differing dwell times.

Typically, first and second fluids are introduced in succession into the common inlet so that the output stream exhibits a desired profile of the first and second fluids. For example, the first and second fluids are compositionally different such that the output stream exhibits a desired concentration profile of the first and second fluids as a mixture. Optionally, one or more additional fluids may be introduced, successively or in parallel, into the common inlet as well to produce an output stream that exhibits a desired profile of the fluids.

### BRIEF DESCRIPTION OF THE DRAWINGS

FIG. 1 provides a graph that plots the concentration profile of liquid B over time for an output stream that exhibits a linear concentration gradient.

FIGS. 2A and 2B, collectively referred to as FIG. 2, depict an exemplary microfluidic device of the invention. FIG. 2A depicts the device in exploded view. FIG. 2B, depicts the device in assembled plan view.

FIG. 3A-3C, collectively referred to as FIG. 3, illustrate how the device of FIG. 2 may be used to generate an output stream that exhibits a stepped concentration profile over time.

FIG. 4 schematically depicts a six-stage generator that operates in a manner similar to the device depicted in FIG. 2.

FIG. 5 provides a graph that plots the concentration profile of liquid B over time for an output stream generated by the generator depicted in FIG. 4 using an assumption of idealized plug flow (solid line) and an assumption of Poiseuille flow (dashed line).

FIG. 6 schematically depicts a quantized three-stage gradient generator that employs six fluid transporting features.

FIG. 7 provides a graph that represents a theoretical plot of percent liquid B resulting from implementation of a quantized gradient generator.

FIG. 8 provides a graph that shows plots of percent liquid B based on the different stages involved.

FIG. 9 schematically depicts a six-stage, fixed constriction gradient generator.

FIG. 10 schematically depicts a preferred embodiment for a fixed constriction gradient generator.

**FIG. 11** provides a graph that shows the modeling results for an eight-stage flow-restriction gradient generator with circular cross-section microconduits.

### DETAILED DESCRIPTION OF THE INVENTION

Before describing the present invention in detail, it is to be understood that the invention is not limited to specific separation devices or types of analytical instrumentation, as such may vary. It is also to be understood that the terminology used herein is for the purpose of describing particular embodiments only, and is not intended to be limiting.

In addition, as used in this specification and the appended claims, the singular article forms "a," "an," and "the" include both singular and plural referents unless the context clearly dictates otherwise. Thus, for example, reference to "a conduit" includes a plurality of conduit as well as a single conduit, reference to "substrate" includes a single substrate as well as a combination of substrates, and the like.

Furthermore, terminology indicative or suggestive of a particular spatial relationship between elements of the invention is to be construed in a relative sense rather an absolute sense unless the context of usage clearly dictates to the contrary. For example, the terms "over" and "on" as used to describe the spatial orientation of a second substrate relative to a first substrate does not necessarily indicate that the second substrate is located above the first substrate. Thus, in a device that includes a second substrate placed over a first substrate, the second substrate may be located above, at the same level as, or below the first substrate depending on the device's orientation. Similarly, an "upper" surface of a substrate may lie above, at the same level as, or below other portions of the substrate depending on the orientation of the substrate.

In this specification and in the claims that follow, reference will be made to a number of terms that shall be defined to have the following meanings, unless the context in which they are employed clearly indicates otherwise:

The term "dwell time" as used herein refers to the time it takes a fluid to flow through a fluid-transporting feature. In general, the dwell time of a fluid-transporting feature is a product of the volume of the feature and the volumetric flow rate of the fluid flowing through the feature. However, other factors may effect the dwell time as well and include the type of fluid flow (e.g., Pouseuille or electro-osmotic flow), any interactions between the fluid and the feature, the compressibility of the fluid, the used volume of the feature, and the like.
The term "flow path" as used herein refers to the route or course along which a fluid travels or moves. Flow paths may be formed from one or more fluid-transporting features of a microfluidic device.

The term "fluid-transporting feature" as herein refers to an arrangement of solid bodies or portions thereof that direct fluid flow. As used herein, the term includes, but is not limited to, capillaries, tubing, chambers, reservoirs, conduits and channels. The term "conduit" as used herein refers to a three-dimensional enclosure formed by one or more walls and having an inlet opening and an outlet opening through which fluid may be transported. The term "channel" is used herein to refer to an open groove or a trench in a surface. A channel in combination with a solid piece over the channel forms a conduit.

The term "fluid-tight" is used herein to describe the spatial relationship between two solid surfaces in physical contact such that fluid is prevented from flowing into the interface between the surfaces.

The prefix "micro" refers to items having dimensions on the order of micrometers or having volumes on the order of microliters. Thus, for example, the term "microfluidic device" refers to a device having features of micron or submicron dimensions, and which can be used in any number of processes, chemical or otherwise, involving very small amounts of fluid. Such processes include, but are not limited to, electrophoresis (e.g., capillary electrophoresis or CE), chromatography (e.g., µLC), screening and diagnostics (using, e.g., hybridization or other binding means), and chemical and biochemical synthesis (e.g., DNA amplification as may be conducted using the polymerase chain reaction, or "PCR") and analysis (e.g., through peptidic digestion). The features of the microfluidic devices are adapted to their particular use. For example, microfluidic devices that are used in separation processes, e.g., CE, may contain microchannels (termed "microconduits" herein when enclosed, i.e., when the second substrate is in place on the microchannel-containing first substrate surface) on the order of 1 µm to 200 µm in diameter, typically 10 µm to 75 µm in diameter, and approximately 0.1 to 50 cm in length. Microfluidic devices that are used in chemical and biochemical synthesis, e.g., DNA amplification, will generally contain reaction zones (termed "reaction chambers" herein when enclosed, i.e., again, when the second substrate is in place on the microchannel-containing first substrate surface) having a volume of about 1 nl to about 100 µl, typically about 10 nl to 20 µl. Other terms containing the prefix "micro," e.g., "microfeature," are to be construed in a similar manner.

The term "substantially identical" as used to describe a plurality of items is used to indicate that the items are identical to a considerable degree, but that absolute identicalness is not required. For example, when fluids are described herein as flowing through different fluid-transporting features at a "substantially identical flow rate," the flow rates may be identical or sufficiently near identical such that any differences in the flow rates are trivial in nature. The terms "substantial" and "substantially" are used analogously in other contexts involve an analogous definition.

Thus, the invention generally relates fluidic devices and methods that employ a plurality of fluid-transporting features associated with differing fluid dwell times. The features typically have a common inlet and a common outlet. Typically, different fluids are introduced in succession into the common inlet but are split into different streams that travel along the different flow paths defined by the fluid-transporting features. The fluids from the different flow paths then merge to produce an output stream from the common outlet. The output stream exhibits at least one desired characteristic generated as a result of the differing dwell times of the fluids traveling therethrough.

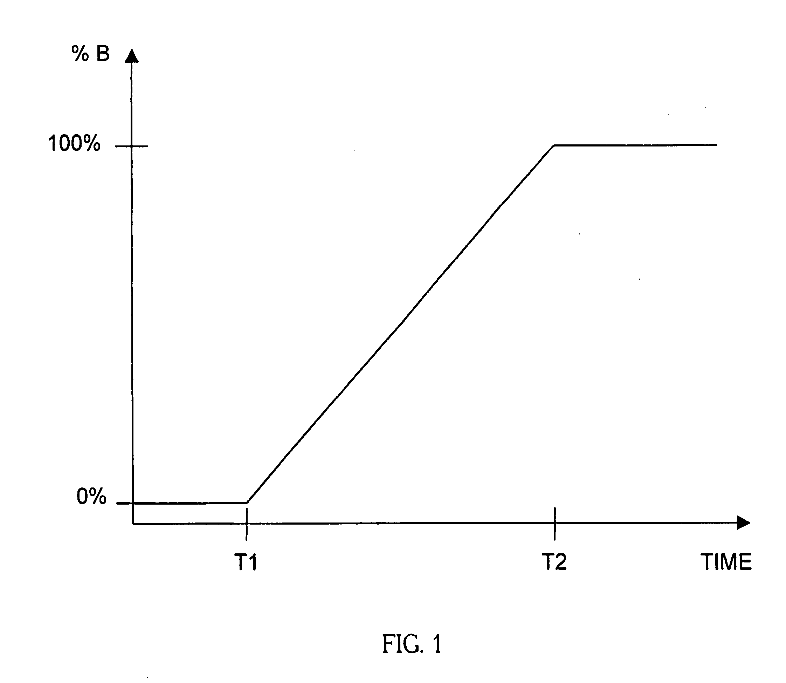

The invention may be used in a number of different applications. For example, the invention may be used to generate an output stream having a desired characteristic such as pH, temperature, or viscosity profile. Typically, though, the invention is used to generate an output stream exhibits desired concentration gradient suitable for microfluidic separation applications. For example, when a first liquid, i.e., liquid A, is mixed with a second liquid of a different composition, i.e., liquid B, a different proportions over time form an output stream such that the output stream may exhibit a linear concentration gradient of liquid B over time that is well suited for use in gradient LC applications. FIG. 1 provides a graph for such an output stream that shows how the concentration of liquid B increases linearly over a period of time that spans from a first point in time, i.e., T1, to a second point in time, i.e., T2.

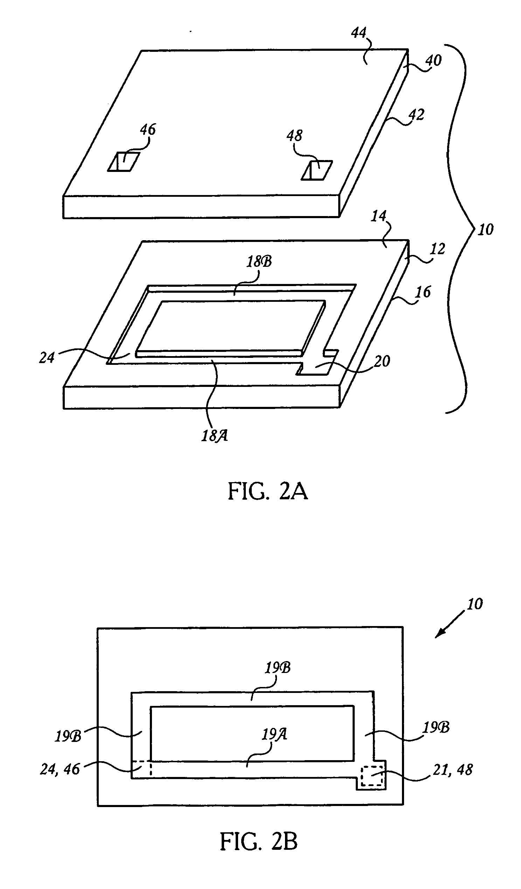

FIG. 2 depicts an exemplary embodiment of the invention in the form of a two-stage microfluidic device. As with all figures referenced herein, in which like parts are referenced by like numerals, FIG. 2 is not necessarily to scale, and certain dimensions may be exaggerated for clarity of presentation. As illustrated in FIG. 2, the microfluidic device 10 includes a first substrate 12 comprising first and second substantially planar opposing surfaces indicated at 14 and 16, respectively, and is comprised of a material that is substantially inert with respect to fluids that will be transported through the microfluidic device. The first substrate 12 has a first fluid-transporting feature in the form of a first microchannel 18A, a second fluid-transporting feature in the form of a second microchannel 18B, each microchannel located in the first planar surface 14. Also located in the upper surface 14 is a mixing feature 20, though, as discussed below, various alternative mixing technologies may be used as well.

The first and second microchannels share a common inlet terminus 24 at their respective upstream ends. The first and second microchannels each terminate at their downstream ends at a mixing feature 20. As shown, the first microchannel 18A has a length that is about half of that of the second microchannel 18B. However, the microchannels 18A and 18B have a substantially identical cross-sectional shape, though identical cross-sectional microchannel shapes are not a requirement of the invention.

The microfluidic device 10 also includes a second substrate 40 that is complementarily shaped with respect to the first substrate 12 and has first and second substantially planar opposing surfaces indicated at 42 and 44, respectively. The second substrate 40 can be comprised of any suitable material for forming the first substrate 12 as described below. The contact surface 42 of the second substrate 40 is capable of interfacing closely with the contact surface 14 of the first substrate 12 to achieve fluid-tight contact between the surfaces. The second substrate 40 may include a variety of features. As shown, inlet 46 is provided as a conduit extending through the second substrate 40 in a direction orthogonal to the second substrate contact surface 42 to result in fluid communication between surfaces 42 and 44. Similarly, outlet 48 is provided as a conduit extending from surface 42 to surface 44.

The second substrate 40 is substantially immobilized over the first substrate contact surface 14. As a result, the second substrate contact surface 42 in combination with the first microchannel 18A defines the first conduit or first stage 19A. Similarly, the second substrate 40, in combination with the second microchannel 18B defines a second conduit or second stage 19B. Likewise, the second substrate 40, in combination with the mixing feature 20, forms a mixing chamber 21. Because the contact surfaces of the second substrate and the first substrate are in fluid-tight contact, conduits 19A and 19B as well as mixing chamber 21 are all generally fluid-tight.

Flow rates for conduits may be adjusted by changing their geometry (cross-sectional area, cross-sectional shape, and/or length) or flow resistance. The geometry of microchannels 18A and 18B may be chosen for both conduits to allow for through-flow of substantially identical fluids at substantially identical flow rates, even though the second conduit 19B is about twice as long as the first conduit 19A. While the conduits may have generally the same cross-sectional shape (rectangular, circular, etc.), the conduits do not have the same cross-sectional areas. In addition or in the alternative, the conduits may be constructed to provide flow rates that effect a desired final gradient profile. In any case, inlet 46 is located over the inlet terminus 24 and therefore fluidly communicates with each conduit. Similarly, outlet 48 is aligned the mixing feature 20 and therefore fluidly communicates with mixing chamber 21.

Accordingly, two different flow paths are formed in the microfluidic device 10. The first flow path extends from the inlet 46, through the first conduit 19A, through the mixing chamber 21, and to the outlet 48. The second flow path extends from the inlet 46, through the second conduit 19A, through the mixing chamber 21, and to the outlet 48. The mixing chamber 21 has a size and shape effective to provide sufficient mixing action between the fluids from the conduits 19A and 19B such that any output stream emerging from outlet 48 is provided as a substantially uniform mixture of the fluids. Optimally, the dwell time associated with the mixing chamber is small relative to the dwell time associated with the conduits 19A and 19B.

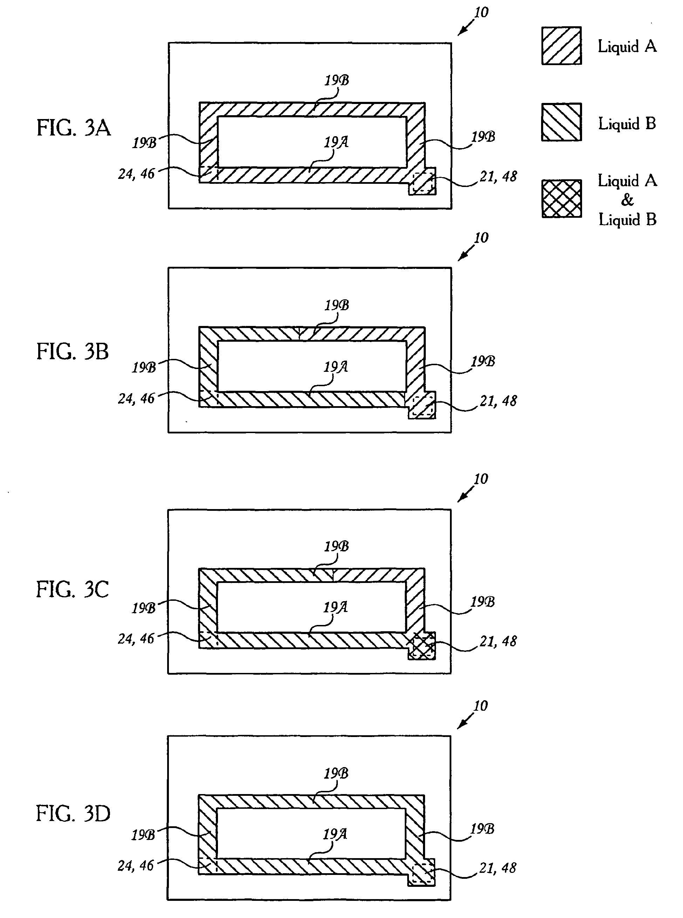

FIG. 3 illustrates that the microfluidic device of FIG. 2 may be employed to generate an output stream from two liquids of different compositions, i.e., liquid A and liquid B, wherein the stream exhibits a change over time in the relative concentrations of the two liquids. FIG. 3 depicts the device in use under "plug" flow, such as that induced for electrokinetic flow, rather than pressure-induced flow. Pressure induced flow, as discussed below, would result in parabolic velocity profiles.

In FIG. 3A, all flow paths of the device has been filled with liquid A. In FIG. 3B, liquid B is introduced into inlet 46. Because the conduits 19A and 19B provides for substantially identical flow rates, liquid B is split evenly into two streams that flow along the first and second flow paths. As a result, liquid A is displaced from conduits 19A and 19B, merges at the mixing chamber 21 and forms an output stream emerging from outlet 48. At this point, the output stream contains only liquid A.

In FIG. 3C, liquid B continues to be introduced into inlet 46, but a sufficient period of time has passed so that the dwell time associated with conduit 19A has been met. As a result, liquid B has displaced all of liquid A from conduit 19A, and liquid B is beginning to flow from conduit 19A into the mixing chamber 21. However, as the dwell time for conduit 19B is about twice that of conduit 19A, only the upstream half of the volume of conduit 19B has been filled with liquid B. As a result, liquid A continues to flow from conduit 19B into the mixing chamber. In any case, liquids B and A from conduits 19A and 19B, respectively are mixed in mixing chamber 21 to form an output stream that emerges from outlet 48. Accordingly, the output stream changes from 100% liquid A to a mixture that contains 50% liquid A and 50% liquid B.

In FIG. 3D, liquid B has completely displaced all of liquid A from conduit 19B. As a result, liquid B flows from both conduits 19A and 19B into the mixing chamber 21. As a result, the output stream from the mixing chamber 21 changes from a mixture that contains 50% liquid A and 50% liquid B to 100% liquid B. In short, the output stream exhibits a profile that exhibits a stepwise and decreasing concentration of liquid A and a stepwise and increasing concentration of liquid B.

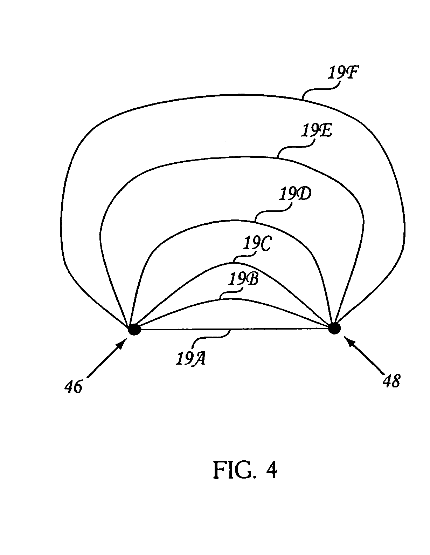

FIG. 4 illustrates another embodiment of the invention that includes additional fluid transporting features. In general, the gradient generator shown in FIG. 4 operates in a similar manner as the embodiment shown in FIGS. 2 and 3 except that six stages are used instead of two. As shown in FIG. 4, six fluid-transporting features indicated at 19A-19F are included that share a common inlet 46 and a common outlet 48. Each fluid-transporting feature is associated with a different dwell time because the features are of different lengths and substantially identical volumetric flow rates. Optionally, features 19B-19F have lengths that are increasing integer multiples of the length of feature 19A.

In operation, liquid A is introduced into the inlet 46 to fill all fluid-transporting features and to form an output stream from outlet 48 that includes merged fluids from the fluid-transporting features. Then liquid B may be introduced into inlet 46. Initially, the output stream will consist essentially of liquid A. After a short delay time to allow liquid B to travel through the shortest fluid-transporting feature 19A, liquid B will then start to flow out of the feature 19A at a first point in time, T1, to merge into the output stream out, thereby raising the percentage of liquid B contained in the output stream. After awhile, liquid B will start to flow out of the next shortest feature 19B at a second point in time, T2, again raising the percentage of liquid B in the output stream. As the features are successively filled in their entirety with liquid B, the percentage of liquid B in the output stream will increase at successive points in time, T3, T4, T5, and T6 at which liquid B flows out of features 19C, 19D, 19E, and 19F, respectively.

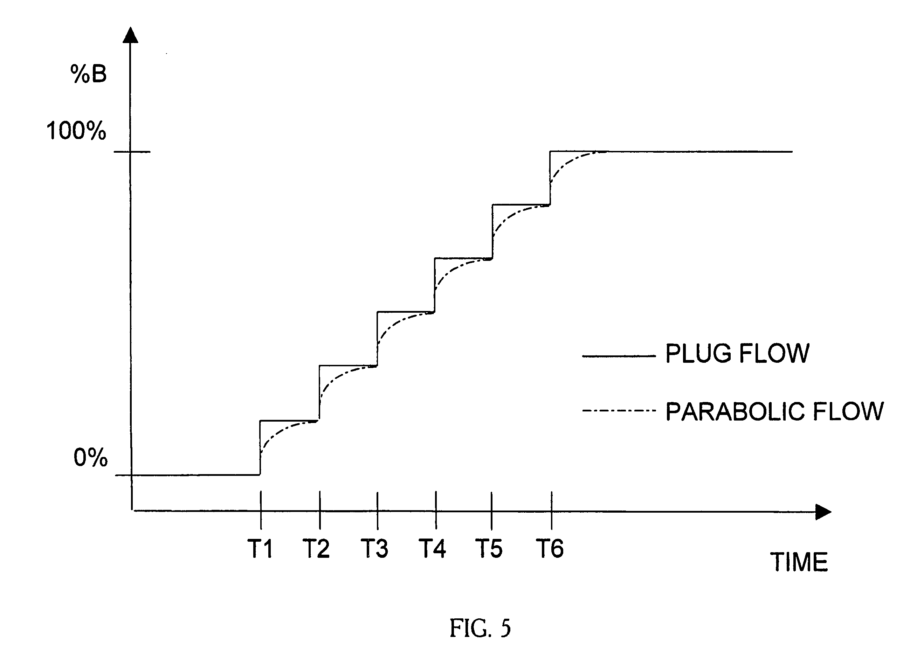

FIG. 5 provides a graph for such an output stream under different assumptions. In a simple idealized case, where plug flow may be assumed and it is further assumed that the flow rate through each of features 19A through 19 F is the same, an output stream may exhibit a stepped concentration gradient, as shown by the solid line. In the case of a standard, pressure-induced flow with the same flow rate in each feature, the velocity profile of the liquid within each channel is parabolic and the initial flow of liquid B out of each channel does not occur instantaneously but, instead, over time. This rounds the corners of the stepped profile, as shown by the dotted line.

Although the invention does not require fluid-transporting features that have identical or substantially identical volumetric fluid flow rates, it is often more convenient to carry out the invention using such features. From a design perspective, identical or substantially identical volumetric flow rates make it easier to calculate dwell times. Identical or substantially volumetric flow rates are typically also desirable from a manufacturing perspective.

Identical volumetric flow rates for fluid-transporting features can be achieved by accounting for flow resistance of the features. In general, the volumetric flow rate for any fluid-transporting feature is the product of its length and flow resistance. Thus, to produce a fluid-transporting feature having a length, 2L that has the same flow rate as one having that has a length, L, one may have to produce the features such that the longer feature has a flow resistance that is half that of the shorter feature. Furthermore, when the features have the same cross-sectional shape but different lengths, the longer feature will typically require a larger effective cross-sectional area to ensure the same flow rate for both features.

Nevertheless, as suggested in Fig. 5, the dwell time of a feature for a particular fluid is dependent on several factors. Factors affecting dwell time include, for example, the type of fluid flow (e.g. Pouseuille or electro-osmotic flow), interactions between the fluid and the feature, the compressibility of the fluid, the used volume of the feature, the mixing or diffusion between the two, and the like. For Pouseuille flow, the fluid flowing at the center of a conduit flows faster and will arrive at the end of the conduit before the fluids near the wall do. When the conduit has a circular cross-section, the velocity profile therein may be parabolic.

Thus, for embodiments of the invention that exhibit Pouseuille flow, the second fluid will start to flow out of the feature earlier than the dwell time that is implied solely by feature volume and fluid flow rate and the percentage of the second fluid flowing out will not be 100%. It will take longer than the implied time before 100% of the second fluid will be flowing out of the feature. In contrast, flow in a conduit that is based solely on electro-osmosis may have a dwell time based solely on the feature volume and the fluid flow rate. One of ordinary skill in the art will be able to account for such differences when employing the invention for a particular desired dwell times

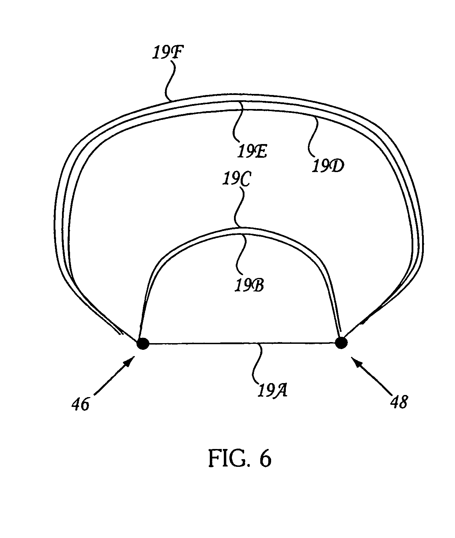

FIG. 6 schematically illustrates another embodiment of the invention that provides an exemplary quantized gradient generator having six fluid-transporting features 19A-19F. In general, the gradient generator shown in FIG. 6 operates in a similar manner as the gradient generator shown in FIG. 4 except that the six fluid-transporting features have substantially identical cross-sectional areas. Features having substantially identical cross-sectional areas are typically more repeatable from a manufacturing perspective and less prone to variability in use.

In addition, the fluid-transporting features are shown arranged in three stages rather than six. For example, the first stage includes a single fluid-transporting feature 19A having a length L. The second stage includes two features 19B and 19C having a substantially shape and size, so as to have substantially identical fluid-conveying capabilities. The second stage 19B and 19C is twice as long as the feature 19A of the first stage. Similarly, the third stage includes three fluid-transporting features 19D-19F having substantially identical fluid-conveying capabilities and is thrice as long as feature 19A. Assuming that flow resistance for fluid-transporting features of the same cross-sectional area is proportional to the length of the features, the overall volumetric flow rate for each of the three stages should be substantially identical.

The gradient generator of FIG. 6 may be operated in a manner similar to that described for the embodiments of FIG. 4. That is, liquid A may be introduced into the inlet 46 to fill the fluid-transporting features of all three stages and to form an output stream from outlet 48 that includes merged fluids from three stages. Then as the stages are successively filled in their entirety with liquid B, the percentage of liquid B in the output stream will increase.

As discussed above, the volumetric flow rate for any fluid-transporting feature is generally the product of its length and flow resistance. Similarly, stages that include longer fluid-transporting features require a larger effective cross-section to provide a flow rate equal to stages that have shorter fluid-transporting features. Accordingly, for the inventive embodiment exemplified in FIG. 6, there is a (Lᵢ/L₁)² dependence in the volume of each stage (where Lᵢ is the length of stage i and L₁ is the length of the shortest stage). Since the flow rates are constant in each stage, there is also a (Lᵢ/L₁)² dependence for the amount of time it takes for a liquid to travel the length of stage i.

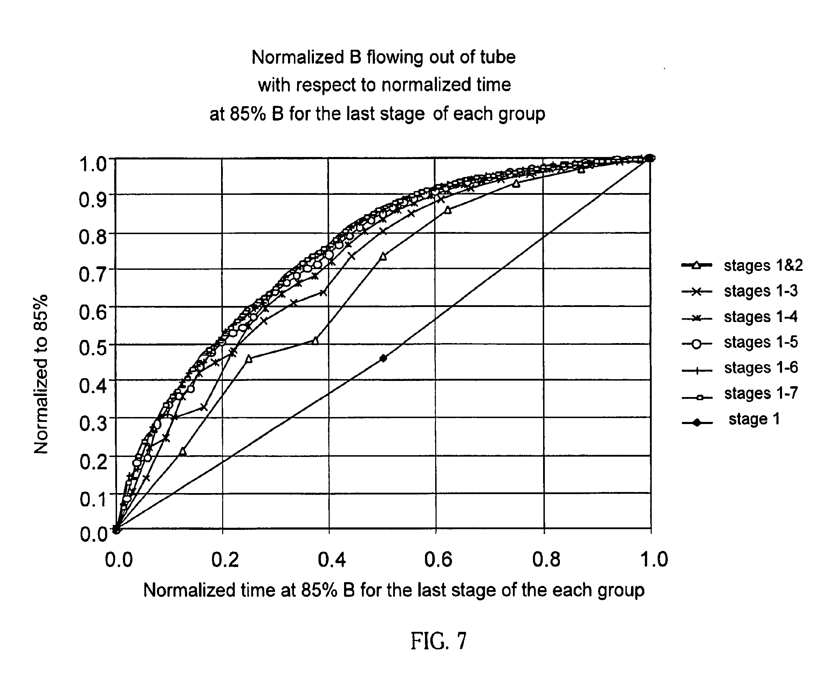

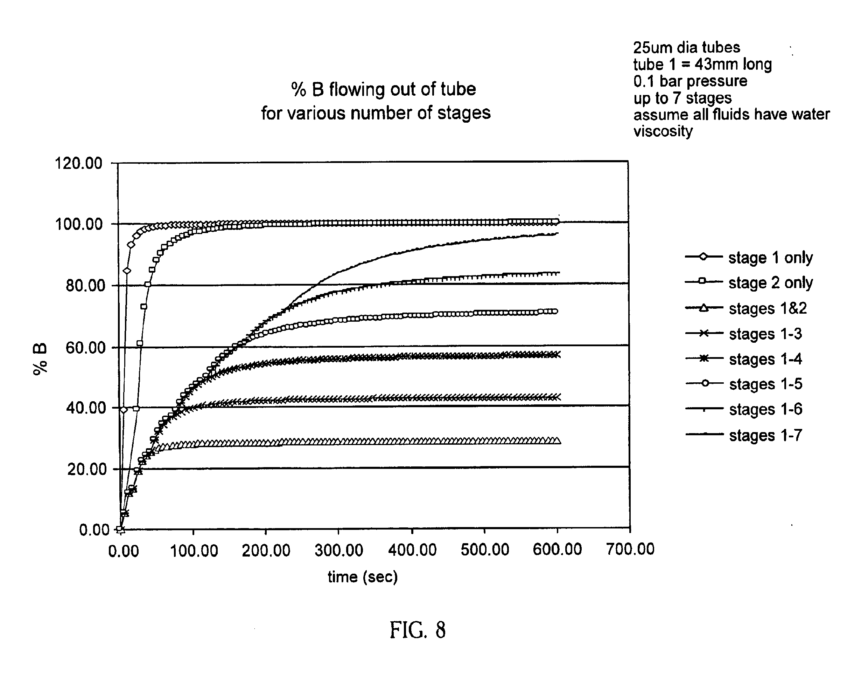

Accordingly, it may be difficult to produce an output stream exhibiting a linear concentration gradient of a particular fluid, e.g., liquid B, relative to another fluid, e.g., liquid A, over time using a multistage generator similar to that depicted in FIG. 6. In general, quantized-stage gradient generators like those shown in FIG. 6 may be used to produce an output stream having a non-linear gradient. FIGS. 7 and 8 provides graphs that show the concentration of liquid B over time in an output stream generated by successively introducing liquids A and B into multistage generators similar to the generator shown in FIG. 6 over time using tubes under the parameters set forth in FIG. 8. Each data line represents the normalized percent B for a different number of stages. The horizontal scale is normalized for each data line to the amount of time it takes to get to 85% B coming out of the generator. Again, smoothing may be provided by the parabolic velocity profile for each stage.

FIG. 8 provides a plot showing two processes. The "stage 1 only" and "stage 2 only" data lines show the flow within the individual stages 1 and 2. 100% represents 100% of the flow out that stage being liquid B. The other data lines show the percent liquid B as a total of a 7 stage system. For example, the data for stages 1-3 show that stage 1, 2, and 3 combine to provide about 43% of the total output of liquid B after 600 seconds.

Accordingly, an increasing number of stages generally lead to an asymptotic approach to an inverse parabolic profile of percent B output with respect to time. That is, an increase in the number of stages does not necessarily lead to an output stream with a linear gradient. A nonlinear gradient profile may be formed instead. In some instances, single stage devices may be more suited for forming an output stream with a linear gradient that a multi-stage device.

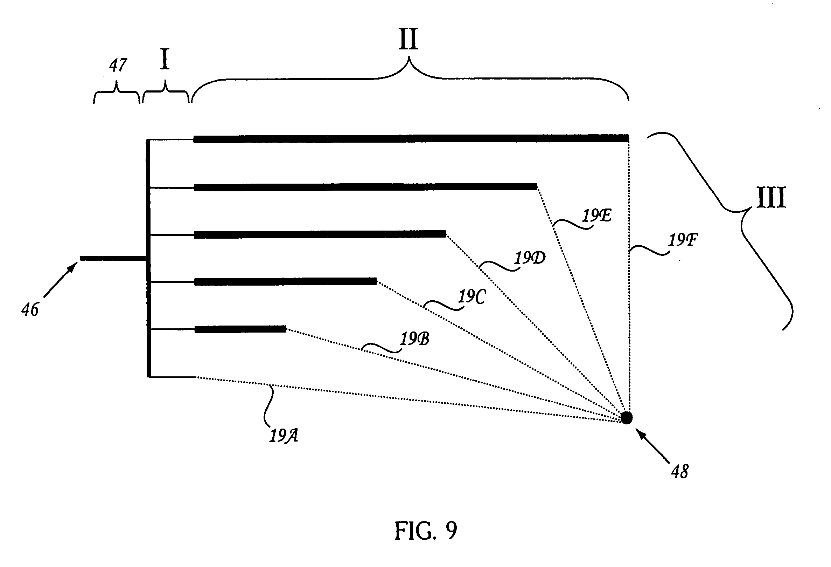

FIG. 9 schematically illustrates still another embodiment of the invention that provides an exemplary gradient generator. Again, six fluid-transporting features 19A-19F which correspond to six different stages are provided having a common inlet 46 and a common outlet 48. Each stage has a flow restriction portion indicated for section I that is identical in geometry, flow rate, and length to that in all the other stages of the system. The flow restriction portion in each stage is followed by a dwell-time controlling portion of different lengths indicated for section II.
While the flow restriction may provide for the substantially identical flow rate through each stage, the dwell-time controlling portions may dictate the dwell-time associated with each stage as well as the volume for each stage. Depicted in dotted lines are optional final portions of each stage located downstream from the dwell-time controlling portion. The effects of the fluid-transporting features in section III on the flow rate in each stage should be taken into account as well. In the simplest case, the length and cross-sections of each fluid-transporting feature are the same as for the others. The flow restriction portion of each stage may be tuned in channel geometry or length to account for the effects caused by section II or section III portions of each stage. This may result in flow rates in each stage that are well-tuned to provide the desired final gradient profile.

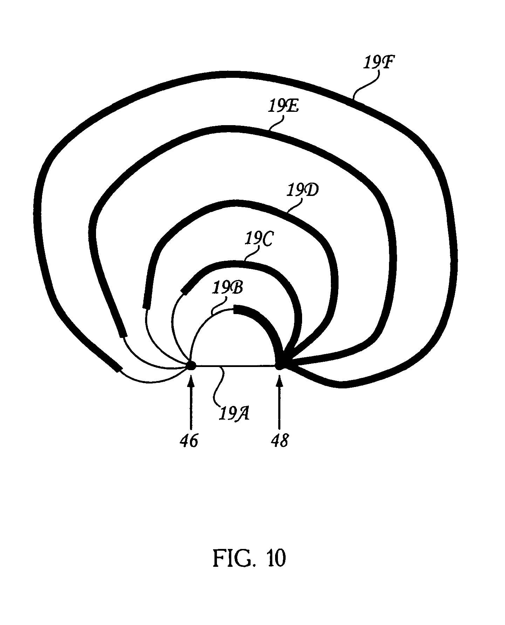

FIG. 10 illustrates schematically a preferred embodiment of the restriction-defined gradient generation device. Again, fluid-transporting features 19A-19F which correspond to six different stages are provided having a common inlet 46 and a common outlet 48. The device operates in a manner similar to that of FIG. 9. Optionally, a feature may be added or omitted to provide change the number of the device's stages. For example, feature 19F may be omitted, thereby resulting in a five-stage device.

For FIGS. 9 and 10, while the flow restriction portions are depicted upstream from the dwell-time controlling portions, their relative positions may be reversed as well. In addition, the flow restriction portion should provide nearly all of the flow restriction for each stage, and the dwell-time controlling portion should provide for nearly all control over the dwell-time associated with each stage. In any case, the final portions, if present, should be of the same length and have a lower flow restriction than the dwell-time controlling portions.

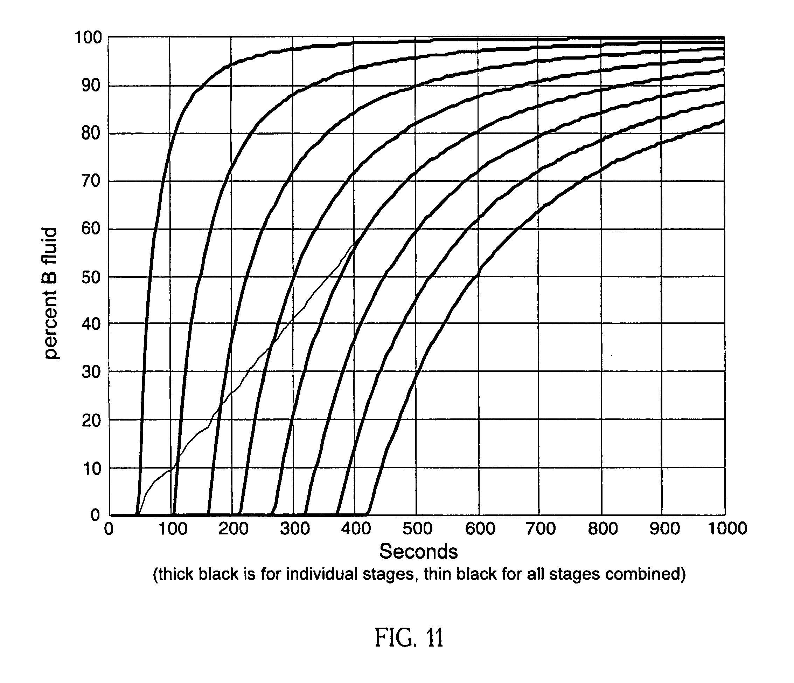

FIG. 11 shows the modeled gradient for an eight-stage gradient generation configuration with circular cross-section features in each stage. This model takes into account the parabolic velocity profile of the fluid within each section of the stages. The thick lines represent the percentage of fluid B in each channel as a function of time while the thin line represents the combined percentage of fluid B exiting the gradient generator. This simulation does not include the effects of diffusion mixing between fluids A and B during the gradient generation process.

The different features of the invention described above may be combined in different ways. For example, certain features may be selected such that, given a particular input pressure or flow rate, a particular gradient profile can be generated. In addition, different modules may be designed to carry out different aspects of the invention. By selectively combined the different modules, it may be possible to produce output streams for any specific application.

Modules may be provided in the form of microfluidic devices, e.g., as shown and described in FIG. 2 and its accompanying text, respectively. For example, substrates may be assembled to form layers of microchannels to produce an output stream exhibiting a desired characteristic. Each substrate may be constructed to provide specific gradient characteristics. When the substrates are stacked together to provide fluid communication between the microchannels of the different substrates, a gradient generator may be formed to provide a specific gradient profile. If one wanted to change the gradient profile, it would be simple to select a different set of layers and stack them together to form a new gradient profile. This would allow application developers to be able to change gradients during method development without having to wait to fabricate a new microfluidic device.

The materials used to form the substrates of the microfluidic devices of the invention as described above are selected with regard to physical and chemical characteristics that are desirable for proper functioning of the microfluidic device. The substrate may be fabricated from a material that enables formation of high definition (or high "resolution") features, i.e., microchannels, chambers and the like, that are of micron or submicron dimensions. That is, the material must be capable of microfabrication so as to have desired miniaturized surface features.

Preferably, the substrate is capable of being microfabricated in such a manner as to form features in, on and/or through the surface of the substrate. This may be done using materials removal techniques, e.g., dry etching, wet etching, laser etching, laser ablation or the like. However, any material removal technique should be employed with care so as to avoid uncontrolled materials removal. For example careful selection of etch compositions and/or parameters may be required to avoid uncontrolled undercutting, that may accompany etching processes.

Microstructures can also be formed on the surface of a substrate by other techniques. For example, features may be molded and/or embossed on the surface of a substrate. In addition, additive techniques may be used. For example, microstructres may be formed by adding material to a substrate, e.g., using photo-imageable polyimide to form polymer channels on the surface of a glass substrate. Also, all device materials used should be chemically inert and physically stable with respect to any substance with which they come into contact when used to introduce a fluid sample (e.g., with respect to pH, electric fields, etc.).

Suitable materials for forming the present devices include, but are not limited to, polymeric materials, ceramics (including aluminium oxide and the like), glass, metals, composites, and laminates thereof. In general, the terms "metallic," "ceramic," "semiconductor" and "polymeric" are used herein in their ordinary sense. For example, the term "metallic" generally describes any of a category of electropositive elements that usually have a shiny surface, are generally good conductors of heat and electricity, and can be formed into thin sheets or wires. Similarly, the term "semiconductor" is used to indicate any of various solid crystalline substances having electrical conductivity greater than insulators but less than good conductors. Exemplary semiconductors include elemental solids such as Si and Ge and compound semiconductors such as GaAs. The term "ceramic" is used to indicate to a hard, brittle, heat-resistant and corrosion-resistant dielectric material made typically made by heating an inorganic compound, e.g., single or mixed metal oxides such as aluminum, zirconium or silicon oxides, nitrides, and carbides, at a high temperature. A ceramic material may be single crystalline, multicrystalline, or, as in the case of glass, amorphous.

Polymeric materials are particularly preferred herein, and will typically be organic polymers that are homopolymers or copolymers, naturally occurring or synthetic, crosslinked or uncrosslinked. Specific polymers of interest include, but are not limited to, polyimides, polycarbonates, polyesters, polyamides, polyethers, polyurethanes, polyfluorocarbons, polystyrenes, polysulfones, poly(acrylonitrile-butadiene-styrene)(ABS), acrylate and acrylic acid polymers such as polymethyl methacrylate, and other substituted and unsubstituted polyolefins, and copolymers thereof. In some instances, halogenated polymers may be used. Exemplary commercially available fluorinated and/or chlorinated polymers include polyvinylchloride, polyvinylfluoride, polyvinylidene fluoride, polyvinylidene chloride, polychorotrifluoroethylene, polytetrafluoroethylene, polyhexafluoropropylene, and copolymers thereof.

Generally, at least one of the substrates comprises a biofouling-resistant polymer when the microfluidic device is employed to transport biological fluids. Polyimide is of particular interest and has proven to be a highly desirable substrate material in a number of contexts. Polyimides are commercially available, e.g., under the tradename Kapton® (DuPont, Wilmington, Del.) and Upilex® (Ube Industries, Ltd., Japan). Polyetheretherketones (PEEK) also exhibit desirable biofouling resistant properties.

The devices of the invention may also be fabricated from a "composite," i.e., a composition comprised of unlike materials. The composite may be a block composite, e.g., an A-B-A block composite, an A-B-C block composite, or the like. Alternatively, the composite may be a heterogeneous combination of materials, i.e., in which the materials are distinct from separate phases, or a homogeneous combination of unlike materials. As used herein, the term "composite" is used to include a "laminate" composite. A "laminate" refers to a composite material formed from several different bonded layers of identical or different materials. Other preferred composite substrates include polymer laminates, polymer-metal laminates, e.g., polymer coated with copper, a ceramic-in-metal or a polymer-in-metal composite. One preferred composite material is a polyimide laminate formed from a first layer of polyimide such as Kapton®., that has been co-extruded with a second, thin layer of a thermal adhesive form of polyimide known as KJ®, also available from DuPont (Wilmington, Delaware).

The embodiments of the invention in the form of microfluidic devices can be fabricated using any convenient method, including; but not limited to, micromolding and casting techniques, embossing methods, surface micro-machining and bulk-micromachining. The latter technique involves formation of microstructures by etching directly into a bulk material, typically using wet chemical etching or reactive ion etching ("RIE"). Surface micro-machining involves fabrication from films deposited on the surface of a substrate.

A preferred technique for preparing the present microfluidic devices is laser ablation. In laser ablation, short pulses of intense ultraviolet light are absorbed in a thin surface layer of material. When laser ablation technique is used, the laser must be selected according to the material to be removed. For example, the energy required to vaporize glass is typically five to ten times higher than that required for organic materials. Laser ablation will typically involve use of a high-energy photon laser such as an excimer laser of the F₂, ArF, KrCl, KrF, or XeCl type or of solid Nd-YAG or Ti:sapphire types. However, other ultraviolet light sources with substantially the same optical wavelengths and energy densities may be used as well. Laser ablation techniques are described, for example, by Znotins et al. (1987) Laser Focus Electro Optics, at pp. 54-70, and in U.S. Pat. Nos. 5,291,226 and 5,305,015 to Schantz et al. Preferred pulse energies for certain materials are greater than about 100 millijoules per square centimeter and pulse durations are shorter than about 1 microsecond. Under these conditions, the intense ultraviolet light photo-dissociates the chemical bonds in the substrate surface. The absorbed ultraviolet energy is concentrated in such a small volume of material that it rapidly heats the dissociated fragments and ejects them away from the substrate surface. Because these processes occur so quickly, there is no time for heat to propagate to the surrounding material. As a result, the surrounding region is not melted or otherwise damaged.

The fabrication technique that is used must provide for features of sufficiently high definition, i.e., microscale components, channels, chambers, etc., such that precise alignment "microalignment" of these features is possible, i.e., the laser-ablated features are precisely and accurately aligned, including, e.g., the alignment of complementary microchannels with each other, projections and mating depressions, grooves and mating ridges, and the like.

To immobilize the substrates of the inventive device relative to each other, fluid-tight pressure sealing techniques may be employed. In some instances, external means may be used to urge the pieces together (such as clips, tension springs or associated clamping apparatus).
Internal means such as male and female couplings or chemical means such as welds may be advantageously used as well. Similarly, a seal may be provided between substrates. Any of a number of materials may be used to form the seal. Adhesives such as those in the form of a curable mass, e.g., as a liquid or a gel, may be placed between the substrates and subjected to curing conditions to form an adhesive polymer layer therebetween. Additional adhesives, e.g., pressure-sensitive adhesives or solvent-containing adhesive solutions may be used as well.

Thus, the invention provides previously unknown advantages in the fluidic arts. For example, the invention allows the use of a single high pressure pump, a low pressure pump, a microfluidic or macrofluidic device, and a single switching valve to generate high, medium, and low pressure LC gradients. Each pump may be used to pump a single liquid. The invention also facilitates the production of repeatable LC gradients that are only dependent on the geometry of the device, the composition of fluids used, and the precision of the pressure or flow rate in the high pressure pump operation. Furthermore, the invention may be advantageously used to decrease delay time between gradient generation in a mobile phase and the arrival of the mobile phase in microfluidic LC separation applications. This is especially important for low flow rate applications where delay times may become a significant portion of the total run time of the analysis. Solvent waste may reduced in gradient generating applications since almost all pumped solvent is used for the gradient generating. Other advantages include: low flow rate gradients at high pressure with low complexity devices; repeatability; and absolute knowledge of the total volumes of fluid pumps

Variations of the present invention will be apparent to those of ordinary skill in the art in view of the disclosure contained herein. For example, the inventive device may be constructed to contain or exclude specific features according to the intended use of the device. When the device is not intended for biofluidic applications, the device may not require a biofouling resistant material. In addition, the invention is scale invariant and may be incorporated for devices of almost any size, microfluidic or otherwise. Furthermore, while the fluid transporting microfeatures of FIGS. 2 and 3 have generally been depicted as having rectangular cross-sectional areas, the features are not limit to any particular shape or geometry. Furthermore, the invention is not limited to microfluidic applications involving microchannels on a substrate. For example, capillaries, tubing, and other fluid-transporting technologies may be used.

When mixing is required, any of a number of mixing technologies known in the art may be used. For example, mixing technologies other than those depicted in FIGS. 2 and 3 may be used. In some instances, the mixing feature may be separated from the gradient generation part of the device while still remaining somewhere in the device. In addition or in the alternative, the mixing feature may be connected by a single channel from the terminus of the multiple channels. Off-chip mixers may be advantageously used as well. Additional variations of the invention may be discovered upon routine experimentation without departing from the spirit of the present invention.

## Claims

1. A microfluidic device (10), comprising:
a plurality of fluid-transporting features (19A, 19B; 19A-19F), for transporting fluid, extending, for simultaneous fluid flow, from a common inlet (46) to a common outlet (48), each feature (19) associated with a differing fluid dwell time; and
a means for effecting fluid flow of a first fluid (Liquid A) and a second fluid (Liquid B) in succession to the common inlet,
wherein the differing liquid dwell times, in conjunction with a change from a first fluid to a second fluid at the inlet, are operable to cause, at the outlet, fluid to flow that comprises a proportion of the first fluid and a proportion of the second fluid.

2. The device (10) of claim 1, wherein the features (19) have different lengths.

3. The device (10) of claim 1 or 2, wherein the features (19) are constructed in a manner that allows fluid flowing through each feature (19) to exhibit a substantially identical flow rate.

4. The device (10) of claim 1, 2 or 3, wherein the features (19) have a substantially identical cross sectional area.

5. The device (10) of claim 1, 2 or 3, wherein at least one fluid-transporting feature (19) exhibits different cross-sectional areas between the inlet (46) and outlet (48).

6. The device (10) of claim 5, wherein each fluid-transporting feature (19) includes a flow restriction portion upstream from a dwell-time controlling portion.

7. The device (10) of claim 6, wherein the flow restriction portions are substantially identical in length.

8. The device (10) of claim 6. wherein the dwell-time controlling portions are different in length.

9. The device (10) of claim 5, wherein each fluid-transporting feature (19) includes a flow restriction portion downstream from a dwell-time controlling portion.

10. The device (10) of any one of claims 1 to 9, further comprising a means (21) for mixing fluids downstream from the fluid-transporting features (19).

11. The device (10) of any one of claims 1 to 10, further comprising a first substrate (12) and a second substrate (40), wherein the features (19) are located between the first substrate (12) and the second substrate (40).

12. The device (10) of claim 11, wherein at least one feature (19) is a conduit defined at least in part by a channel located on an interior surface of the first substrate (12) and/or second substrate (40).

13. The device (10) of claim 1, wherein the means for effecting fluid flow through the features comprises, upstream from the inlet, a source of a first fluid, a source of a second fluid, and a switching valve for providing alternating communication between the inlet (46) and either one of the sources.

14. A method for producing a fluid stream comprising the steps of:
a) providing a plurality of fluid-transporting features (19), for transporting fluid, extending, for simultaneous fluid flow, from a common inlet (46) to a common outlet (48), each fluid-transporting feature (19) associated with a differing fluid dwell time; and
b) introducing a first fluid (Liquid A) and a second fluid (Liquid B) in succession into the common inlet,
wherein the differing fluid dwell times, in conjunction with a change from the first fluid to the second fluid at the inlet, cause fluid to flow at the outlet that comprises a proportion of the first fluid and a proportion of the second fluid.

15. The method of claim 14, wherein step b) comprises introducing first, second, and third fluids into the common inlet (46) in succession,

## Patentansprüche

1. Mikrofluideinrichtung (10), die aufweist:
eine Vielzahl von Flüssigkeitstransportmerkmalen (19A, 19B; 19A bis 19F) zum Transportieren eines Fluids,
die von einem gemeinsamen Zulauf (46) bis zu einem gemeinsamen Ablauf (48) verlaufen, um einen gleichzeitigen Fluidstrom zu erzeugen, wobei jedem Merkmal (19) eine verschiedene Fluidverweilzeit zugeordnet ist, und
ein Mittel zum Erzeugen eines Fluidstroms eines ersten Fluids (Flüssigkeit A) und eines zweiten Fluids (Flüssigkeit B) nacheinander zum gemeinsamen Zulauf,
wobei die verschiedenen Flüssigkeitsverweilzeiten in Verbindung mit einem Wechsel von einem ersten Fluid zu einem zweiten Fluid am Zulauf dazu genutzt werden können, dass das Fluid am Ablauf einen Anteil des ersten Fluids und einen Anteil des zweiten Fluids aufweist.

2. Einrichtung (10) nach Anspruch 1, wobei die Merkmale (19) unterschiedliche Längen aufweisen.

3. Einrichtung (10) nach Anspruch 1 oder 2, wobei die Merkmale (19) so gestaltet sind, dass die durch jedes Merkmal (19) strömenden Fluide eine im Wesentlichen identische Strömungsgeschwindigkeit aufweisen.

4. Einrichtung (10) nach Anspruch 1, 2 oder 3, wobei die Merkmale (19) im Wesentlichen identische Querschnittsflächen aufweisen.

5. Einrichtung (10) nach Anspruch 1, 2 oder 3, wobei mindestens ein Flüssigkeitstransportmerkmal (19) abweichende Querschnittsflächen zwischen dem Zulauf (46) und dem Ablauf (48) aufweist.

6. Einrichtung (10) nach Anspruch 5, wobei jedes Flüssigkeitstransportmerkmal (19) in Strömungsrichtung vor einem Verweilzeit-Steuerungsteil einen Strömungsdrosselungsteil aufweist.

7. Einrichtung (10) nach Anspruch 6, wobei die Länge der Strömungsdrosselungsteile im Wesentlichen identisch ist.

8. Einrichtung (10) nach Anspruch 6, wobei die Länge der Verweilzeit-Steuerungsteile unterschiedlich ist.

9. Einrichtung (10) nach Anspruch 5, wobei jedes Flüssigkeitstransportmerkmal (19) in Strömungsrichtung nach einem Verweilzeit-Steuerungsteil einen Strömungsdrosselungsteil aufweist.

10. Einrichtung (10) nach einem der Ansprüche 1 bis 9, die ferner in Strömungsrichtung nach den Flüssigkeitstransportmerkmalen (19) ein Mittel (21) zum Mischen von Fluiden aufweist.

11. Einrichtung (10) nach einem der Ansprüche 1 bis 10, die ferner ein erstes Substrat (12) und ein zweites Substrat (40) aufweist, wobei die Merkmale (19) zwischen dem ersten Substrat (12) und dem zweiten Substrat (40) angeordnet sind.

12. Einrichtung (10) nach Anspruch 11, wobei es sich bei mindestens einem Merkmal (19) um eine Leitung handelt, die zumindest teilweise durch einen Kanal definiert ist, der sich auf einer Innenfläche des ersten Substrats (12) und/oder des zweiten Substrats (40) befindet.

13. Einrichtung (10) nach Anspruch 1, wobei das Mittel zum Erzeugen eines Fluidstroms durch die Merkmale in Strömungsrichtung vor dem Zulauf eine Quelle eines ersten Fluids, eine Quelle eines zweiten Fluids und ein Schaltventil zum abwechselnden Verbinden zwischen dem Zulauf (46) und einer der Quellen aufweist.

14. Verfahren zum Erzeugen eines Fluidstroms, das die folgenden Schritte aufweist:
a) Bereitstellen einer Vielzahl von Flüssigkeitstransportmerkmalen (19) zum Transportieren eines Fluids, die von einem gemeinsamen Zulauf (46) zu einem gemeinsamen Ablauf (48) verlaufen, um einen gleichzeitigen Fluidstrom zu erzeugen, wobei jedem Flüssigkeitstransportmerkmal (19) eine verschiedene Flüssigkeits-Verweilzeit zugeordnet ist, und
b) Einführen eines ersten Fluids (Flüssigkeit A) und eines zweiten Fluids (Flüssigkeit B) nacheinander in den gemeinsamen Zulauf,
wobei die verschiedenen Flüssigkeitsverweilzeiten in Verbindung mit einem Wechsel vom ersten Fluid zum zweiten Fluid am Zulauf dazu führen, dass das Fluid am Ablauf einen Anteil des ersten Fluids und einen Anteil des zweiten Fluids aufweist.

15. Verfahren nach Anspruch 14, wobei der Schritt b) das Einführen eines ersten, eines zweiten und eines dritten Fluids nacheinander in den gemeinsamen Zulauf aufweist.

## Revendications

1. Dispositif microfluidique (10), comprenant :
une pluralité d'éléments de transport de fluide (19A, 19B ; 19A-19F), pour transporter un fluide,
s'étendant, pour l'écoulement simultané de fluide, depuis un orifice d'entrée commun (46) vers un orifice de sortie commun (48), chaque élément de transport de fluide (19) étant associé à un temps de séjour de fluide différent, et
des moyens pour permettre l'écoulement d'un premier fluide (liquide A) et d'un deuxième fluide (liquide B) successivement vers l'orifice d'entrée commun ;
dans lequel les différents temps de séjour de liquide, conjointement à un changement d'un premier fluide à un deuxième fluide à l'orifice d'entrée, peuvent servir à amener, à l'orifice de sortie, à s'écouler un fluide comprenant une proportion du premier fluide et une proportion du deuxième fluide.

2. Dispositif (10) suivant la revendication 1, dans lequel les éléments (19) ont des longueurs différentes.

3. Dispositif (10) suivant la revendication 1 ou 2, dans lequel les éléments (19) sont construits de manière à permettre que le fluide s'écoulant à travers chaque élément (19) présente un débit pratiquement identique.

4. Dispositif (10) suivant la revendication 1, 2 ou 3, dans lequel les éléments (19) présentent une aire de section transversale pratiquement identique.

5. Dispositif (10) suivant la revendication 1, 2 ou 3, dans lequel un élément de transport de fluide (19) au moins présente des aires de section transversale différentes entre l'orifice d'entrée (46) et l'orifice de sortie (48).

6. Dispositif (10) suivant la revendication 5, dans lequel chaque élément de transport de fluide (19) inclut une partie d'étranglement en amont d'une partie de régulation de temps de séjour.

7. Dispositif (10) suivant la revendication 6, dans lequel les parties d'étranglement sont de longueur pratiquement identique.

8. Dispositif (10) suivant la revendication 6, dans lequel les parties de régulation de temps de séjour sont de longueur différente.

9. Dispositif (10) suivant la revendication 5, dans lequel chaque élément de transport de fluide (19) inclut une partie d'étranglement en aval d'une partie de régulation de temps de séjour.

10. Dispositif (10) suivant l'une quelconque des revendications 1 à 9, comprenant en outre des moyens (21) pour mélanger des fluides en aval des éléments de transport de fluide (19).

11. Dispositif (10) suivant l'une quelconque des revendications 1 à 10, comprenant en outre un premier substrat (12) et un deuxième substrat (40), dans lequel les éléments (19) se trouvent entre le premier substrat (12) et le deuxième substrat (40).

12. Dispositif (10) suivant la revendication 11, dans lequel un élément (19) au moins est une conduite définie au moins en partie par un canal situé sur une surface intérieure du premier substrat (12) et/ou du deuxième substrat (40).

13. Dispositif (10) suivant la revendication 1, dans lequel les moyens pour permettre l'écoulement du fluide à travers les éléments comprennent, en amont de l'orifice d'entrée, une source d'un premier fluide, une source d'un deuxième fluide et une vanne d'aiguillage pour permettre une communication alternée entre l'orifice d'entrée (46) et l'une des sources.

14. Procédé de production d'un courant liquide comprenant les étapes suivantes :
a) le fait de prévoir une pluralité d'éléments de transport de fluide (19), pour transporter un fluide, s'étendant, pour l'écoulement simultané de fluide, depuis un orifice d'entrée commun (46) vers un orifice de sortie commun (48), chaque élément de transport de fluide (19) étant associé à un temps de séjour de fluide différent, et
b) l'introduction d'un premier fluide (liquide A) et d'un deuxième fluide (liquide B) successivement dans l'orifice d'entrée commun ;
dans lequel les différents temps de séjour de liquide, conjointement à un changement du premier fluide au deuxième fluide à l'orifice d'entrée, amènent à s'écouler à l'orifice de sortie un fluide comprenant une proportion du premier fluide et une proportion du deuxième fluide.

15. Procédé suivant la revendication 14, dans lequel l'étape b) comprend l'introduction d'un premier, d'un deuxième et d'un troisième fluides successivement dans l'orifice d'entrée commun (46).
